# EUROPÄISCHE PATENTSCHRIFT

(11) **EP 2 396 205 B1**
(45) Veröffentlichungstag und Bekanntmachung des Hinweises auf die Patenterteilung: **20.03.2013**
(21) Anmeldenummer: 10701833.5
(22) Anmeldetag: 14.01.2010
(51) Int. Cl.: B60T 11/26, B60T 17/06

(54) **BAUGRUPPE BESTEHEND AUS EINEM AUSGLEICHSBEHÄLTER UND EINEM HAUPTZYLINDER FÜR EINE HYDRAULISCHE KRAFTFAHRZEUGBREMSANLAGE**
ASSEMBLY MADE OF A COMPENSATING TANK AND A MASTER CYLINDER FOR A HYDRAULIC MOTOR VEHICLE BRAKE SYSTEM
MODULE CONSTITUÉ D'UN RÉSERVOIR DE COMPENSATION ET D'UN MAÎTRE-CYLINDRE POUR UN SYSTÈME DE FREINAGE HYDRAULIQUE DE VÉHICULE AUTOMOBILE

(30) Priorität: 11.02.2009 DE 102009000770; 12.01.2010 DE 102010000813
(43) Veröffentlichungstag der Anmeldung: 21.12.2011
(73) Patentinhaber: Continental Teves AG & Co. oHG, 60488 Frankfurt (DE)
(72) Erfinder: NEUMANN, Hans-Jürgen, 65428 Rüsselsheim (DE); TANDLER, Peter, 61476 Kronberg/Ts. (DE); OTTMANN, Swen, 60488 Frankfurt/M (DE); SIBR, David, 54301 Vrchlabi (CZ); VIT, Stepan, 50601 Jicin (CZ)
(86) Internationale Anmeldenummer: PCT/EP2010/050367
(87) Internationale Veröffentlichungsnummer: WO 2010/091912

(56) Entgegenhaltungen:
- EP-A1- 1 987 993
- DE-A1- 10 217 682
- DE-A1- 10 321 784
- FR-A1- 2 861 034
- FR-A1- 2 861 356
- FR-A1- 2 898 096

## Beschreibung

Die Erfindung betrifft eine Baugruppe bestehend aus einem Ausgleichsbehälter und einem Hauptzylinder für eine hydraulische Kraftfahrzeugbremsanlage gemäß dem Oberbegriff des Patentanspruchs 1.

Derartige Baugruppen sind allgemein bekannt, beispielsweise aus der DE 100 47 325 A1, und sind in der Regel knapp unterhalb einer Motorhaube des Kraftfahrzeuges angeordnet. Insbesondere der Ausgleichsbehälter der Baugruppe befindet sich in eingebauten Zustand oft direkt unter der Motorhaube.

Aus dem Stand der Technik sind Sicherheitsvorrichtungen für Kraftfahrzeuge bekannt, bei welchen ein so genanntes Bremsgerät bestehend aus Bremskraftverstärker, Hauptzylinder und Ausgleichsbehälter bei einem Fahrzeugaufprall mit einer entsprechend großen Deformation aus dem Fußraum herausgeschwenkt wird, damit der Fahrer nicht verletzt wird. Eine derartige Sicherheitsvorrichtung ist beispielsweise aus der DE 103 26 952 A1 bekannt.

Die Erfindung beschäftigt sich mit dem Fußgängerschutz eines Fahrzeuges bzw. dessen Komponenten. Neuere Anforderungen sehen vor, dass die Fahrzeugfront einen passiven Fußgängerschutz aufweist. In diesem Zusammenhang ist es notwendig, dass die Motorhaube des Fahrzeuges die Aufprallenergie eines Körpers absorbieren kann. Dies setzt jedoch voraus, dass sich die Motorhaube deformieren kann. Aufgrund des geringen Bauraumes im Motorraum kann die Baugruppe aus Hauptzylinder und Ausgleichsbehälter nicht tiefer in den Motorraum angeordnet werden. Ferner müssen die Baugruppe und insbesondere der Ausgleichsbehälter gewissen Stabilitätsansprüchen genügen, so dass hierdurch eine Deformation der Motorhaube im Bereich der Baugruppe nicht möglich ist.
Daher ist es Aufgabe der Erfindung, eine Baugruppe aus Hauptzylinder und Ausgleichsbehälter bereitzustellen, welche den Anforderungen bezüglich des Fußgängerschutzes genüge leistet.

Die Aufgabe wird erfindungsgemäß dadurch gelöst, dass der Ausgleichsbehälter Mittel aufweist, welche bei einer bestimmten, auf den Ausgleichsbehälter aufgebrachte Kraft eine begrenzte Bewegung von wenigstens einem Teil des Ausgleichsbehälters in Richtung Hauptzylinder erlauben und die Mittel zwischen einem Boden des Ausgleichsbehälters und dem Hauptzylinder vorgesehen sind. Die Mittel können somit in einfacher Weise in die Baugruppe integriert werden, ohne zusätzlichen Bauraum zu beanspruchen. Gleichzeitig genügt die Baugruppe den Stabilitätsansprüchen beispielsweise bei der Druckbefüllung des Ausgleichsbehälters mit Bremsflüssigkeit und ermöglicht ab einer bestimmten Kraft, die bei einem Aufprall von der Motorhaube auf den Ausgleichsbehälter übertragen wird, ein Absenken des Ausgleichsbehälters, so dass eine Deformation der Motorhaube möglich ist und die Aufprallenergie absorbiert werden kann.

Vorzugsweise sind die Mittel an den Boden des Ausgleichsbehälters angeformt oder sind an dem Boden befestigt. Damit kann sichergestellt werden, dass die Mittel nur im Falle einer ausreichend vorbestimmten Kraft ein Absenken des Ausgleichsbehälters ermöglichen.

Gemäß einer vorteilhaften einfach herzustellenden Ausführungsform ist als Mittel wenigstens ein Steg vorgesehen, welcher als Crashelement an den Boden des Ausgleichsbehälters angeformt ist und bei einer bestimmten, auf den Ausgleichsbehälter aufgebrachten Kraft wegknickt.

Eine alternative vorteilhafte Ausführungsform sieht vor, dass als Mittel wenigstens ein zylinderförmiger Vorsprung vorgesehen ist, welcher als Crashelement an den Boden des Ausgleichsbehälters angeformt ist und bei einer bestimmten, auf den Ausgleichsbehälter aufgebrachten Kraft wegknickt.

Gemäß einer weiteren vorteilhaften einfach herzustellenden Ausführungsform kann vorgesehen sein, als Mittel ein Stift vorzusehen, welcher als Crashelement zwei an den Boden des Ausgleichsbehälters angeformte Laschen durchragt und bei einer bestimmten, auf den Ausgleichsbehälter aufgebrachten Kraft bricht.

Um eine kostengünstige Herstellung und eine einfache Montage zu erzielen, ist dabei der Stift aus Kunststoff vorgesehen und weist an einem ersten Ende einen Kopf und an einem zweiten Ende Spreizelemente auf.

Eine andere vorteilhafte Ausführungsform der Erfindung sieht vor, dass als Mittel ein topfförmiges Crashelement vorgesehen ist, welches in an den Boden des Ausgleichsbehälters angeformte Führungsnuten einschiebbar ist und bei einer bestimmten, auf den Ausgleichsbehälter aufgebrachten Kraft wegknickt.

Eine besonders einfache Montage wird dadurch erreicht, dass als Mittel ein topfförmiges Crashelement vorgesehen ist, welches mittels federnden Befestigungsnasen in an den Boden des Ausgleichsbehälters angeformte Hinterscheidungen eingreift und bei einer bestimmten, auf den Ausgleichsbehälter aufgebrachten Kraft wegknickt.

Um die vorbestimmte Kraft bei ausreichender Stabilität des topfförmigen Crashelementes zu erreichen, kann das topfförmige Crashelement aus zwei verschiedenen Werkstoffen vorgesehen sein.

Gemäß einer weiteren vorteilhaften Weiterbildung der Erfindung sind die Mittel in einer Einbuchtung des Bodens des Ausgleichsbehälters angeordnet.

Hierzu können die Mittel als zwei zylindrische Hülsen unterschiedlichen Durchmessers vorgesehen sein, welche mittels eines oder mehreren Verbindungsstegen miteinander verbunden sind und bei einer bestimmten, auf den Ausgleichsbehälter aufgebrachten Kraft durch Brechen der Verbindungsstege ineinander teleskopierbar sind, wobei die Hülse größeren Durchmessers angeformte Vorsprünge zum Halten der Hülsen in der Einbuchtung aufweist.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausführungsformen zeigt. Dabei zeigt jeweils stark schematisiert:
- Figur 1: ein erstes Ausführungsbeispiel der erfindungsgemäßen Baugruppe im Schnitt;
- Figur 2: ein zweites Ausführungsbeispiel der erfindungsgemäßen Baugruppe im Schnitt;
- Figur 3: ein drittes Ausführungsbeispiel der erfindungsgemäßen Baugruppe im Schnitt;
- Figur 4: ein viertes Ausführungsbeispiel der erfindungsgemäßen Baugruppe;
- Figur 5: die Baugruppe gemäß Fig. 4 im Schnitt;
- Figur 6: ein fünftes Ausführungsbeispiel der erfindungsgemäßen Baugruppe teilweise im Schnitt;
- Figur 7: eine weitere Ansicht des fünften Ausführungsbeispiels gemäß Fig. 6;
- Figur 8: das Crashelement des fünften Ausführungsbeispiels im Schnitt;
- Figur 9: ein Crashelement eines sechsten Ausführungsbeispiels im Schnitt;
- Figur 10: ein Crashelement eines siebten Ausführungsbeispiels im Schnitt;
- Figur 11: ein Crashelement eines achten Ausführungsbeispiels im Schnitt;
- Figur 12: ein neuntes Ausführungsbeispiel der erfindungsgemäßen Baugruppe im Schnitt;
- Figur 13: das Crashelement des neunten Ausführungsbeispiels gemäß Fig. 12 im Längsschnitt;
- Figur 14: das Crashelement des neunten Ausführungsbeispiels gemäß Fig. 12 und
- Figur 15: ein Crashelement eines zehnten Ausführungsbeispiels.

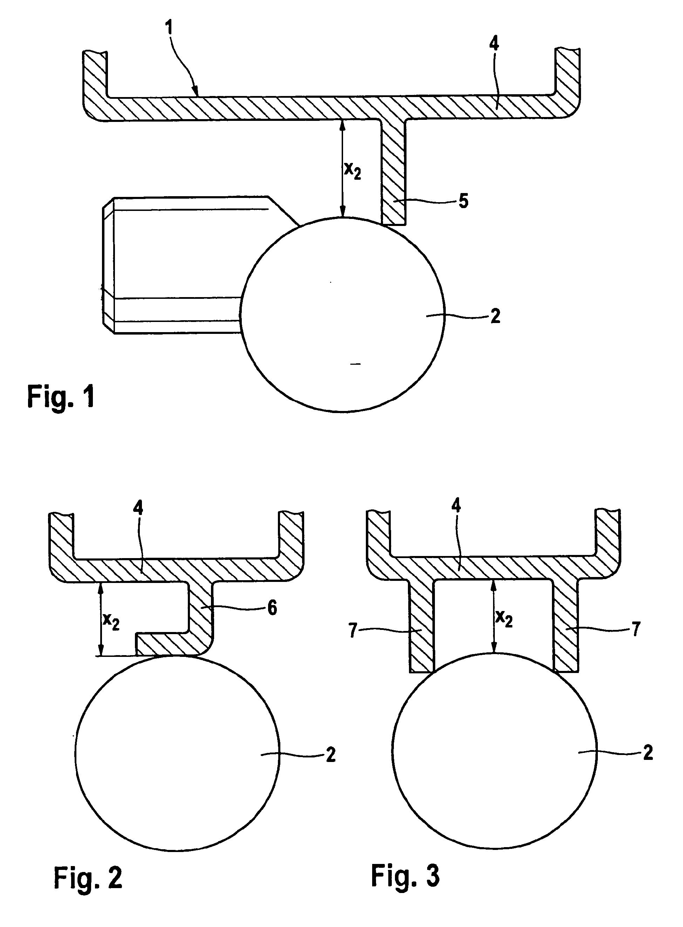

Fig. 1 bis 15 zeigen schematisch Ausführungsbeispiele einer erfindungsgemäßen Baugruppe bestehend aus einem Ausgleichsbehälter 1 und einem Hauptzylinder 2 für eine hydraulische Kraftfahrzeugbremsanlage, deren Aufbau und Funktion grundsätzlich bekannt sind. Nicht gezeigte Anschlussstutzen des Ausgleichsbehälters 1 sind nach dessen Montage auf dem Hauptzylinder 2 in entsprechenden Anschlussöffnungen 3 des Hauptzylinders 2 aufgenommen und verbinden in bekannter Weise Druckmittelkammern des Ausgleichsbehälters 1 mit Druckräumen des Hauptzylinders 2.

Um die Baugruppe derart auszugestalten, dass sie den Anforderungen bezüglich des Fußgängerschutzes genüge leistet, weist der Ausgleichsbehälter 1 der nachfolgend beschriebenen Ausführungsbeispiele Mittel auf, welche bei einer bestimmten, auf den Ausgleichsbehälter 1 aufgebrachte Kraft eine Bewegung von wenigstens einem Teil des Ausgleichsbehälters 1 in Richtung Hauptzylinder 2 erlauben. Damit genügt die Baugruppe den Stabilitätsansprüchen beispielsweise bei der Druckbefüllung des Ausgleichsbehälters 1 mit Bremsflüssigkeit und ermöglicht ab einer bestimmten Kraft, die bei einem Aufprall von der Motorhaube auf den Ausgleichsbehälter 1 übertragen wird, ein Absenken des Ausgleichsbehälters 1 um eine vorbestimmte Strecke x₂, so dass eine Deformation der Motorhaube um eine Strecke x₁ möglich ist und die Aufprallenergie absorbiert werden kann.

Da die nachfolgend beschriebenen Mittel zwischen einem Boden 4 des Ausgleichsbehälters 1 und dem Hauptzylinder 2 vorgesehen, können diese in einfacher Weise in die Baugruppe integriert werden, ohne zusätzlichen Bauraum zu beanspruchen.

Fig. 1 zeigt ein erstes Ausführungsbeispiel. Wie daraus ersichtlich ist, ist an den Boden 4 des Ausgleichsbehälters 1 ein einfach herzustellender Steg 5 als Crashelement angeformt, welcher bei einer bestimmten Kraft auf den Ausgleichsbehälter 1 wegknickt und dadurch ein Absenken des Ausgleichsbehälters 1 ermöglicht wird.

Ein zweites Ausführungsbeispiel, welches in Fig. 2 dargestellt ist, zeigt einen L-förmigen Steg 6 als Crashelement. Die L-Form erlaubt eine verbesserte Abstützung des Steges 6 auf dem Hauptzylinder 2.

Fig. 3 zeigt ein drittes Ausführungsbeispiel. Das Crashelement umfasst hier zwei an den Boden 4 angeformte Stege 7, wobei es aber auch möglich ist, als Crashelement einen zylinderförmigen Vorsprung vorzusehen.

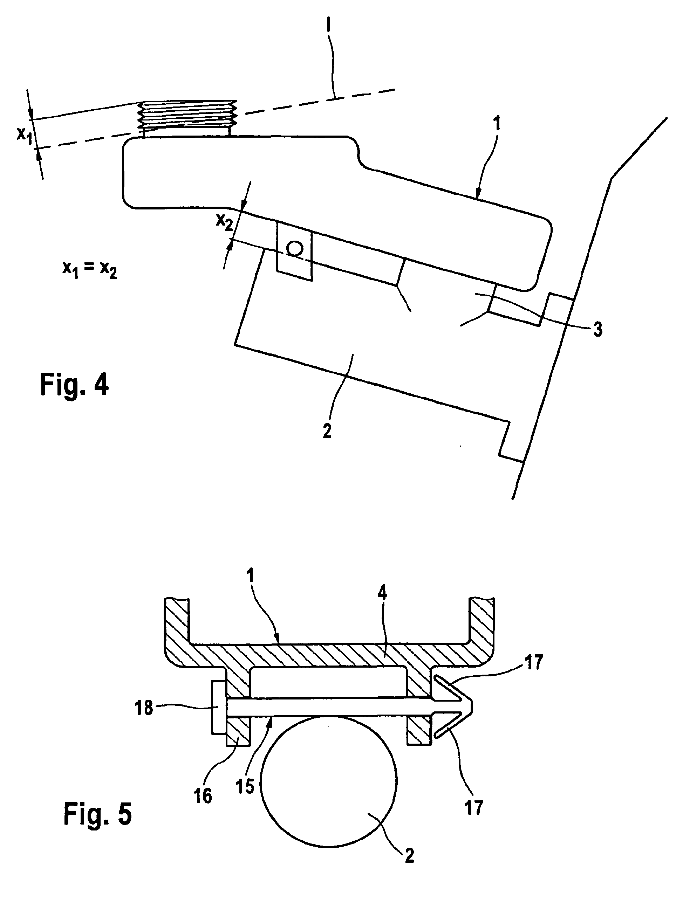

In den Fig. 4 und 5 ist ein viertes Ausführungsbeispiel dargestellt, welches ebenfalls einfach herstellbar ist. Wie insbesondere aus Fig. 5 hervorgeht, ist bei diesem Ausführungsbeispiel als Mittel ein Stift 15 vorgesehen, welcher als Crashelement zwei an den Boden 4 des Ausgleichsbehälters 1 angeformte Laschen 16 durchragt und bei einer bestimmten, auf den Ausgleichsbehälter 1 aufgebrachten Kraft bricht.
Der Stift 15 kann von beiden Seiten montiert werden und ist vorzugsweise aus Kunststoff hergestellt. Zur Verliersicherung weist ein erstes Ende des Stiftes Spreizelemente 17 und ein zweites Ende einen Kopf 18 auf. Der Stift 15 ist einfach herstell- und montierbar.
Aus Fig. 4 geht deutlich hervor, dass der Ausgleichsbehälter 1 bei Bruch des Stiftes 15 um einen Betrag x₂ abgesenkt werden kann. Die gestrichelte Linie 1 zeigt, wie weit sich die Motorhabe des Fahrzeuges deformieren lassen muss, um die Absorption der Aufprallenergie zu ermöglichen.

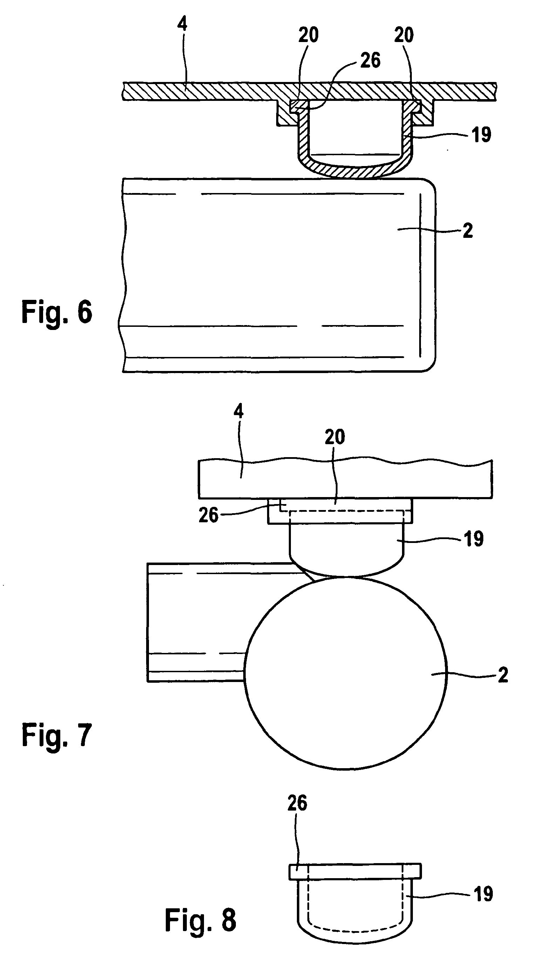

Aus den Fig. 6 bis 11 sind weitere Ausführungsbeispiele zu entnehmen.

So ist beispielsweise den Fig. 6 bis 8 ein topfförmiges Crashelement 19 eines fünften Ausführungsbeispiels zu entnehmen, das in an den Boden 4 des Ausgleichsbehälters 1 angeformte Führungsnuten 20 einschiebbar ist und bei einer bestimmten, auf den Ausgleichsbehälter 1 aufgebrachten Kraft wegknickt. Wie insbesondere aus Fig. 8 hervorgeht, welche das Crashelement 19 zeigt, weist dieses zum Einschieben in die Führungsnuten 20 einen umlaufenden Vorsprung 26 auf.

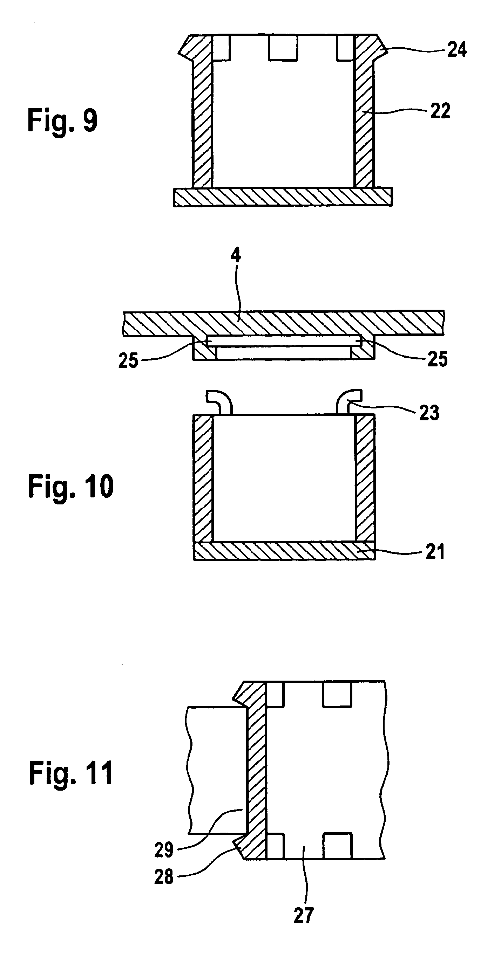

Die Fig. 9 und 10 zeigen wie das vorstehende Ausführungsbeispiel topfförmige Crashelemente 21,22 als Mittel, welche mittels federnden Befestigungsnasen 23,24 in an den Boden 4 des Ausgleichsbehälters 1 angeformte Hinterscheidungen 25 eingreifen und bei einer bestimmten, auf den Ausgleichsbehälter 1 aufgebrachten Kraft wegknicken.

Fig. 11 zeigt ein achtes Ausführungsbeispiel. Im Unterschied zu den topfförmigen Crashelementen 21,22 weist das in Fig. 11 gezeigte zylindrische Crashelement 27 nach innen gerichtete federnde Befestigungselemente 28, welche einen an den Boden 4 des Ausgleichsbehälters 1 angeformten Vorsprung 29 umgreifen.

Um die vorbestimmte Kraft bei ausreichender Stabilität zu erreichen, kann das topfförmigen bzw. zylindrischen Crashelementes 19,21,22,27 aus zwei verschiedenen Werkstoffen vorgesehen sein.

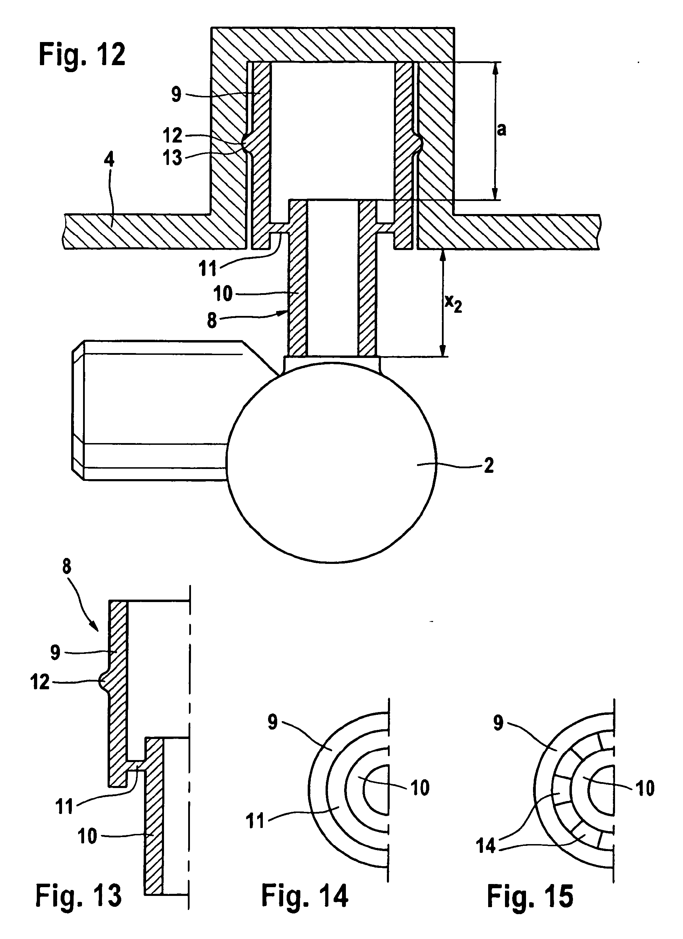

In den Fig. 12 bis 14 ist ein neuntes Ausführungsbeispiel dargestellt. Es zeigt ein Crashelement 8, welches aus zwei zylindrischen Hülsen 9,10 unterschiedlichen Durchmessers besteht. Die beiden Hülsen 9,10 sind mittels eines umlaufenden Verbindungssteges 11 verbunden. Die Hülse 9 ist mittels an ihrer Außenseite angeformte Vorsprünge 12 in einer Einbuchtung 13 des Bodens 4 angeordnet und wird darin gehalten. Die kleinere Hülse 10 liegt mit ihrem Ende an dem Hauptzylinder 2 an. Bei einer bestimmten Kraft auf den Ausgleichsbehälter 1 bricht der Verbindungssteg 11 und die Hülsen 9,10 sind ineinander um die Strecke a teleskopierbar, d.h. die kleine Hülse 10 kann in die größere Hülse 9 eintauchen und der Ausgleichsbehälter 1 kann sich um die Stecke x₂ absenken. Vorteilhafterweise ist die Strecke a größer als die Strecke x₂.

Fig. 7 zeigt ein Crashelement 9 eines zehnten Ausführungsbeispiels, das grundsätzlich dem Ausführungsbeispiel gemäß den Fig. 12 bis 14 entspricht. Im Unterschied hierzu sind mehrere einzelne Verbindungsstege 14 zur Verbindung der beiden Hülsen 9,10 vorgesehen.

### Bezugszeichenliste

- 1: Ausgleichsbehälter
- 2: Hauptzylinder
- 3: Anschlussöffnung
- 4: Boden
- 5: Steg
- 6: Steg
- 7: Steg
- 8: Crashelement
- 9: Hülse
- 10: Hülse
- 11: Verbindungssteg
- 12: Vorsprung
- 13: Einbuchtung
- 14: Verbindungssteg
- 15: Stift
- 16: Lasche
- 17: Spreizelement
- 18: Kopf
- 19: Crashelement
- 20: Führungsnut
- 21: Crashelement
- 22: Crashelement
- 23: Befestigungsnase
- 24: Befestigungsnase
- 25: Hinterscheidung
- 26: Vorsprung
- 27: Crashelement
- 28: Befestigungselement
- 29: Vorsprung

- a: Strecke
- 1: Linie
- x₁: Strecke
- x₂: Strecke

## Patentansprüche

1. Baugruppe bestehend aus einem Ausgleichsbehälter (1) und einem Hauptzylinder (2) für eine hydraulische Kraftfahrzeugbremsanlage, wobei der Ausgleichsbehälter (1) an dem Hauptzylinder (2) über eine lösbare Verbindung befestigt ist und wenigstens einen Anschlussstutzen aufweist, der in einer entsprechenden Anschlussöffnung (3) des Hauptzylinders (2) aufgenommen ist, **dadurch gekennzeichnet, dass** der Ausgleichsbehälter (1) Mittel aufweist, welche bei einer bestimmten, auf den Ausgleichsbehälter (1) aufgebrachten Kraft eine begrenzte Bewegung von wenigstens einem Teil des Ausgleichsbehälters in Richtung Hauptzylinder (2) erlauben und die Mittel zwischen einem Boden (4) des Ausgleichsbehälters (1) und dem Hauptzylinder (2) vorgesehen sind.

2. Baugruppe nach Anspruch 1, **dadurch gekennzeichnet, dass** das die Mittel an den Boden (4) des Ausgleichsbehälters (1) angeformt oder an dem Boden (4) befestigt sind.

3. Baugruppe nach Anspruch 2, **dadurch gekennzeichnet, dass** als Mittel wenigstens ein Steg (5,6,7) vorgesehen ist, welcher als Crashelement an den Boden (4) des Ausgleichsbehälters (1) angeformt ist und bei einer bestimmten, auf den Ausgleichsbehälter (1) aufgebrachten Kraft wegknickt.

4. Baugruppe nach Anspruch 2, **dadurch gekennzeichnet, dass** als Mittel wenigstens ein zylinderförmiger Vorsprung vorgesehen ist, welcher als Crashelement an den Boden (4) des Ausgleichsbehälters (1) angeformt ist und bei einer bestimmten, auf den Ausgleichsbehälter (1) aufgebrachten Kraft wegknickt.

5. Baugruppe nach Anspruch 2, **dadurch gekennzeichnet, dass** als Mittel ein Stift (15) vorgesehen ist, welcher als Crashelement zwei an den Boden (4) des Ausgleichsbehälters (1) angeformte Laschen (16) durchragt und bei einer bestimmten, auf den Ausgleichsbehälter (1) aufgebrachten Kraft bricht.

6. Baugruppe nach Anspruch 5, **dadurch gekennzeichnet, dass** der Stift (15) aus Kunststoff vorgesehen ist und an einem ersten Ende einen Kopf (18) und an einem zweiten Ende Spreizelemente (17) aufweist.

7. Baugruppe nach Anspruch 2, **dadurch gekennzeichnet, dass** als Mittel ein topfförmiges Crashelement (19) vorgesehen ist, welches in an den Boden (4) des Ausgleichsbehälters (1) angeformte Führungsnuten (20) einschiebbar ist und bei einer bestimmten, auf den Ausgleichsbehälter (1) aufgebrachten Kraft wegknickt.

8. Baugruppe nach Anspruch 2, **dadurch gekennzeichnet, dass** als Mittel ein topfförmiges Crashelement (21,22) vorgesehen ist, welches mittels federnden Befestigungsnasen (23,24) in an den Boden (4) des Ausgleichsbehälters (1) angeformte Hinterscheidungen (25) eingreift und bei einer bestimmten, auf den Ausgleichsbehälter (1) aufgebrachten Kraft wegknickt.

9. Baugruppe nach Anspruch 7 oder 8, **dadurch gekennzeichnet, dass** das topfförmige Crashelement (19,21,22) aus zwei verschiedenen Werkstoffen vorgesehen ist.

10. Baugruppe nach Anspruch 1, **dadurch gekennzeichnet, dass** die Mittel in einer Einbuchtung (13) des Bodens (4) des Ausgleichsbehälters (1) angeordnet sind.

11. Baugruppe nach Anspruch 10, **dadurch gekennzeichnet, dass** als Mittel zwei zylindrische Hülsen (9,10) unterschiedlichen Durchmessers vorgesehen sind, welche mittels eines oder mehreren Verbindungsstegen (11,14) miteinander verbunden sind und bei einer bestimmten, auf den Ausgleichsbehälter (1) aufgebrachten Kraft durch Brechen der Verbindungsstege (11,14) ineinander teleskopierbar sind, wobei die Hülse (9) größeren Durchmessers angeformte Vorsprünge (12) zum Halten der Hülsen (9,10) in der Einbuchtung (13) aufweist.

## Claims

1. An assembly comprising a fluid reservoir (1) and a master cylinder (2) for a motor vehicle hydraulic brake system, the fluid reservoir (1) being fastened to the master cylinder (2) by a releasable connection and comprising at least one connection fitting, which is received in a corresponding connection aperture (3) of the master cylinder (2), **characterized in that** the fluid reservoir (1) comprises means, which under a defined force applied to the fluid reservoir (1) allow a limited movement of at least one part of the fluid reservoir in the direction of the master cylinder (2) and the measure provided between a base (4) of the fluid reservoir (1) and the master cylinder (2).

2. Assembly according to Claim 1, **characterized in that** the means are formed onto the base (4) of the fluid reservoir (1) or are fastened to the base (4).

3. Assembly according to Claim 2, **characterized in that** at least one web (5, 6, 7), which is formed onto the base (4) of the fluid reservoir (1) as crash element and which bends out of the way under a defined force applied to the fluid reservoir (1), is provided as means.

4. Assembly according to Claim 2, **characterized in that** at least one cylindrical projection, which is formed onto the base (4) of the fluid reservoir (1) as crash element and which bends out of the way under a defined force applied to the fluid reservoir (1), is provided as means.

5. Assembly according to Claim 2, **characterized in that** a pin (15), which as crash element extends through two straps (16) formed onto the base (4) of the fluid reservoir (1) and which breaks under a defined force applied to the fluid reservoir (1), is provided as means.

6. Assembly according to Claim 5, **characterized in that** the pin (15) is provided from plastics and comprises a head (18) at a first end and expansion elements (17) at a second end.

7. Assembly according to Claim 2, **characterized in that** a cupped crash element (19), which can be inserted into guide grooves (20) formed onto the base (4) of the fluid reservoir (1) and which bends out of the way under a defined force applied to the fluid reservoir (1), is provided as means.

8. Assembly according to Claim 2, **characterized in that** a cupped crash element (21, 22), which by means of sprung fastening lugs (23, 24) engages in undercuts (25) formed onto the base (4) of the fluid reservoir (1) and which bends out of the way under a defined force applied to the fluid reservoir (1), is provided as means.

9. Assembly according to Claim 7 or 8, **characterized in that** the cupped crash element (19, 21, 22) is provided from two different materials.

10. Assembly according to Claim 1, **characterized in that** the means are located in an indentation (13) of the base (4) of the fluid reservoir (1).

11. Assembly according to Claim 10, **characterized in that** means are provided in the form of two cylindrical sleeves (9, 10) of different diameter, which are connected together by means of one or more connecting webs (11, 14) and under a defined force applied to the fluid reservoir (1) can be telescoped one inside the other through breaking of the connecting webs (11, 14), the sleeve (9) of larger diameter comprising formed-on projections (12) to hold the sleeves (9, 10) in the indentation (13).

## Revendications

1. Module constitué d'un réservoir de compensation (1) et d'un maître-cylindre (2) pour une installation hydraulique de frein de véhicule automobile, le réservoir de compensation (1) étant fixé au maître-cylindre (2) par le biais d'une liaison amovible et présentant au moins une tubulure de raccordement qui est reçue dans une ouverture de raccordement correspondante (3) du maître-cylindre (2), **caractérisé en ce que** le réservoir de compensation (1) présente des moyens qui, lorsqu'une force définie est appliquée au réservoir de compensation (1), permettent un mouvement limité d'au moins une partie du réservoir de compensation dans la direction du maître-cylindre (2) et les moyens sont prévus entre un fond (4) du réservoir de compensation (1) et le maître-cylindre (2).

2. Module selon la revendication 1, **caractérisé en ce que** les moyens sont façonnés sur le fond (4) du réservoir de compensation (1) ou sont fixés sur le fond (4).

3. Module selon la revendication 2, **caractérisé en ce que** l'on prévoit en tant que moyens au moins une nervure (5, 6, 7) qui est façonnée sous forme d'élément d'absorption de choc sur le fond (4) du réservoir de compensation (1) et qui s'écarte par fléchissement lorsqu'une force est appliquée au réservoir de compensation (1).

4. Module selon la revendication 2, **caractérisé en ce que** l'on prévoit en tant que moyens au moins une saillie de forme cylindrique qui est façonnée en tant qu'élément d'absorption de choc sur le fond (4) du réservoir de compensation (1) et qui s'écarte par fléchissement lorsqu'une force est appliquée sur le réservoir de compensation (1).

5. Module selon la revendication 2, **caractérisé en ce que** l'on prévoit en tant que moyens une goupille (15) qui, en tant qu'élément d'absorption de choc, pénètre à travers deux pattes (16) façonnées sur le fond (4) du réservoir de compensation (1) et se rompt lorsqu'une force est appliquée sur le réservoir de compensation (1).

6. Module selon la revendication 5, **caractérisé en ce que** la goupille (15) est en plastique et présente, à une première extrémité, une tête (18) et à une deuxième extrémité des éléments d'écartement (17).

7. Module selon la revendication 2, **caractérisé en ce que** l'on prévoit en tant que moyens un élément d'absorption de choc en forme de pot (19), qui peut être introduit dans des rainures de guidage (20) façonnées sur le fond (4) du réservoir de compensation (1) et qui s'écarte par fléchissement lorsqu'une force est appliquée sur le réservoir de compensation (1).

8. Module selon la revendication 2, **caractérisé en ce que** l'on prévoit en tant que moyens un élément d'absorption de choc en forme de pot (21, 22) qui vient en prise au moyen d'ergots de fixation élastiques (23, 24) dans des contre-dépouilles (25) façonnées sur le fond (4) du réservoir de compensation (1) et qui s'écarte par fléchissement lorsqu'une force est appliquée sur le réservoir de compensation (1).

9. Module selon la revendication 7 ou 8, **caractérisé en ce que** l'élément d'absorption de choc en forme de pot (19, 21, 22) est réalisé à partir de deux matériaux différents.

10. Module selon la revendication 1, **caractérisé en ce que** les moyens sont disposés dans un renfoncement (13) du fond (4) du réservoir de compensation (1).

11. Module selon la revendication 10, **caractérisé en ce que** l'on prévoit en tant que moyens deux douilles cylindriques (9, 10) de diamètres différents, qui sont connectées l'une à l'autre au moyen d'une ou de plusieurs nervures de liaison (11, 14), et lorsqu'une force définie est appliquée sur le réservoir de compensation (1), peuvent être télescopées l'une dans l'autre en cassant les nervures de liaison (11, 14), la douille (9) de plus grand diamètre présentant des saillies façonnées (12) pour retenir les douilles (9, 10) dans le renfoncement (13).
